# EUROPÄISCHE PATENTSCHRIFT

(11) **EP 3 186 118 B1**
(45) Veröffentlichungstag und Bekanntmachung des Hinweises auf die Patenterteilung: **19.12.2018**
(21) Anmeldenummer: 15749723.1
(22) Anmeldetag: 06.08.2015
(51) Int. Cl.: B60T 8/36

(54) **VENTILEINHEIT ZUR DRUCKMODULATION IN EINER DRUCKLUFT-BREMSANLAGE**
VALVE UNIT FOR MODULATING THE PRESSURE IN A PNEUMATIC BRAKE SYSTEM
UNITÉ DE SOUPAPE POUR LA MODULATION EN PRESSION DANS UNE INSTALLATION DE FREINAGE PNEUMATIQUE

(30) Priorität: 27.08.2014 DE 102014012711
(43) Veröffentlichungstag der Anmeldung: 05.07.2017
(73) Patentinhaber: WABCO GmbH, 30453 Hannover (DE)
(72) Erfinder: DREYER, Werner, 30826 Garbsen (DE); RUNGE, Karsten, 31832 Springe (DE); TEICHMANN, Andreas, 30916 Isernhagen (DE)
(74) Vertreter: Lauerwald, Jörg
(86) Internationale Anmeldenummer: PCT/EP2015/001626
(87) Internationale Veröffentlichungsnummer: WO 2016/029992

(56) Entgegenhaltungen:
- EP-B1- 0 498 584
- WO-A1-01/15949
- DE-A1- 2 517 571
- DE-B3-102008 028 439
- US-A1- 2003 020 325

## Beschreibung

Die Erfindung betrifft eine Ventileinheit zur Druckmodulation in einer Druckluft-Bremsanlage, mit einem Bremsdruckeingang, einem Bremsdruckausgang und einem Entlüftungsausgang, sowie mit mindestens einem pneumatisch ansteuerbaren Hauptventil und einem dem Hauptventil zugeordneten, als Magnetventil ausgebildeten Vorsteuerventil, welche in einem Ventilgehäuse angeordnet sind, das mit einer in Einbaulage weitgehend horizontalen Teilungsebene in ein Basisgehäuse und einen Gehäusedeckel unterteilt ist, wobei der Bremsdruckeingang, der Bremsdruckausgang sowie der Entlüftungsausgang in dem Basisgehäuse angeordnet sind, das Hauptventil in dem Basisgehäuse zwischen dem Bremsdruckeingang und dem Bremsdruckausgang mit senkrecht zu der Teilungsebene ausgerichteter Betätigungsachse angeordnet ist, das Vorsteuerventil in dem Gehäusedeckel angeordnet ist, und mindestens eine Steuerkammer des Hauptventils durch eine der Teilungsebene zugewandte Innenwand des Gehäusedeckels begrenzt wird.

Bei einer Ventileinheit der vorgenannten Bauart kann es sich um ein Druckregelventil eines Antiblockiersystem in einem Fahrzeug handeln, bei dem zwei in dem Basisgehäuse angeordnete Hauptventile, nämlich ein Einlassventil und ein Auslassventil, als Membranventile mit weitgehend in der Teilungsebene angeordneten Membranen ausgebildet sind, und bei dem die diesen zugeordneten, in dem Gehäusedeckel angeordneten Vorsteuerventile als 3/2-Wege-Magnetventile ausgebildet sind. Das Fahrzeug kann ein Kraftfahrzeug oder ein Schienenfahrzeug sein.

Ein Druckregelventil eines Antiblockiersystems weist die drei Schaltfunktionen "Druckaufbau", "Druckhalten" und "Druckabbau" auf. In der Schaltfunktion "Druckaufbau" der Ventileinheit ist das Einlassventil geöffnet und das Auslassventil geschlossen, so dass der über ein Bremsventil am Bremsdruckeingang eingesteuerte Bremsdruck von dem Druckregelventil unverändert an den Bremsdruckausgang und an mindestens einen daran angeschlossenen Radbremszylinder weitergeleitet wird.

Da die Schaltfunktion "Druckaufbau" dem Ruhezustand der Ventileinheit entspricht, verbindet das Vorsteuerventil des Einlassventils im unbestromten Zustand seiner Magnetspule die Steuerkammer des Einlassventils mit einer den niedrigen Steuerdruck führenden Steuerleitung. Ebenso verbindet das Vorsteuerventil des Auslassventils im unbestromten Zustand seiner Magnetspule die Steuerkammer des Auslassventils mit einer den hohen Steuerdruck führenden Steuerleitung. In der Schaltfunktion "Druckhalten" des Druckregelventils sind das Einlassventil und das Auslassventil geschlossen, so dass der am Bremsdruckausgang und dem mindestens einen daran angeschlossenen Radbremszylinder anliegende Bremsdruck dann konstant gehalten wird. Zur Einstellung dieser Schaltfunktion wird nur das Vorsteuerventil des Einlassventils durch Bestromung seiner Magnetspule umgeschaltet und damit die Steuerkammer des Einlassventils mit dem hohen Steuerdruck beaufschlagt. In der Schaltfunktion "Druckabbau" des Druckregelventils ist das Einlassventil geschlossen und das Auslassventil geöffnet, so dass der Bremsdruckausgang und der mindestens eine daran angeschlossene Radbremszylinder dann entlüftet werden. Zur Einstellung dieser Schaltfunktion werden beide Vorsteuerventile durch Bestromung ihrer Magnetspulen umgeschaltet und damit die Steuerkammer des Einlassventils mit dem hohen Steuerdruck und die Steuerkammer des Auslassventils mit dem niedrigen Steuerdruck (Umgebungsdruck) beaufschlagt.

Die Schaltfunktionen "Druckhalten" und "Druckabbau" des Druckregelventils sind Blockierschutzfunktionen, mit denen ein bremsbedingtes Blockieren des mindestens einen zugeordneten Rades vermieden werden soll. Diese Schaltfunktionen werden durch eine entsprechende Ansteuerung der Vorsteuerventile von einem Steuergerät des Antiblockiersystems gesteuert, in dem die Signale von Raddrehzahlsensoren zur Erkennung eines bevorstehenden oder schon eingetretenen Blockierens der gebremsten Räder ausgewertet werden.

Eine derartige Ventileinheit ist beispielsweise in der DE 25 17 571 A1 beschrieben. Bei dieser bekannten Ventileinheit ist ein längliches Ventilgehäuse mit einer in der Einbaulage horizontalen Teilungsebene in ein Gehäuseunterteil und ein Gehäuseoberteil unterteilt. Der Bremsdruckeingang und der Entlüftungsausgang sind in Längsrichtung mit horizontaler Ausrichtung weitgehend axial gegenüberliegend und der Bremsdruckausgang mit ebenfalls horizontaler Ausrichtung weitgehend mittig rechtwinkelig dazu in dem Gehäuseunterteil angeordnet. Die Membranventile sind in dem Gehäuseunterteil zwischen dem Bremsdruckeingang und dem Entlüftungsausgang mit parallelen Betätigungsachsen sowie einer Anordnung der Membranen in einer gemeinsamen, weitgehend der Teilungsebene entsprechenden Membranebene unter Einspannung zwischen dem Gehäuseunterteil und dem Gehäuseoberteil in Längsrichtung des Ventilgehäuses hintereinander angeordnet. Das Vorsteuerventil des Einlassventils und das Vorsteuerventil des Auslassventils sind mit jeweils vertikaler Ausrichtung ihrer Betätigungsachsen und gleichen Schaltrichtungen oberhalb des jeweils zugeordneten
Membranventils radial benachbart zueinander in dem Gehäuseoberteil angeordnet.

Bei einer weiteren, aus der EP 0 498 584 B1 bekannten derartigen Ventileinheit ist das Ventilgehäuse mit einer in Einbaulage vertikalen Teilungsebene in ein Eingangsgehäuse und ein Ausgangsgehäuse unterteilt. Der Bremsdruckeingang ist mit horizontaler Ausrichtung oben in dem Eingangsgehäuse angeordnet. Der Bremsdruckausgang ist mit horizontaler Ausrichtung dem Bremsdruckeingang weitgehend axial gegenüberliegend in dem Ausgangsgehäuse angeordnet, wogegen der Entlüftungsausgang vertikal nach unten gerichtet in dem Ausgangsgehäuse angeordnet ist. Die Membranventile sind in dem Ausgangsgehäuse zwischen dem Bremsdruckausgang und dem Entlüftungsausgang mit parallelen Betätigungsachsen sowie einer Anordnung der Membranen in einer gemeinsamen, weitgehend der Teilungsebene entsprechenden Membranebene unter Einspannung zwischen dem Ausgangsgehäuse und dem Eingangsgehäuse vertikal übereinander angeordnet. Das Vorsteuerventil des Einlassventils und das Vorsteuerventil des Auslassventils sind mit jeweils horizontaler Ausrichtung ihrer Betätigungsachsen und entgegengesetzten Schaltrichtungen in etwa mittig rechtwinkelig zu den Drucklufteingängen und Druckluftausgängen sowie parallel zu der Teilungsebene radial benachbart zueinander in dem Eingangsgehäuse angeordnet. Die Magnetspulen der Vorsteuerventile sind in einem Magnetblock angeordnet, der zusammen mit den eingesetzten mechanischen Bauteilen der Magnetventile zwischen einem Gehäuseoberteil und einem Gehäuseunterteil des Eingangsgehäuses angeordnet ist. Zur Abdichtung sind zwischen dem Magnetblock, den Ventilblöcken, und den Ventilsitzen der Magnetventile einerseits und dem Gehäuseoberteil und dem Gehäuseunterteil des Eingangsgehäuses andererseits Dichtungen bzw. Dichtringe angeordnet. Zur Fixierung des Gehäuseoberteils und des Gehäuseunterteils mit dem Magnetblock der Magnetventile einerseits sowie der Einspannung der Membranen der Membranventile andererseits sind das Gehäuseoberteil und das Gehäuseunterteil des Eingangsgehäuses jeweils mit dem Ausgangsgehäuse verschraubt.

Aus der WO 01/159 491 A1 und der US 2003/00203 25 A1 ist allgemein das Klemmen von Gehäusedeckeln mit Elektromagnetventilen auf einem Basisgehäuse bekannt.

Schließlich ist in der DE 10 2008 028 439 B3 eine derartige Ventileinheit beschrieben, bei der ein längliches Ventilgehäuse mit in Einbaulage weitgehend horizontalen Teilungsebenen in ein Gehäuseunterteil, ein Gehäuseoberteil sowie eine dazwischen angeordnete Zwischenplatte unterteilt ist. Der Bremsdruckeingang, der Bremsdruckausgang und der Entlüftungsausgang sind mit jeweils horizontaler Ausrichtung in dem Gehäuseunterteil angeordnet. Die Membranventile sind in dem Gehäuseunterteil mit parallelen Betätigungsachsen und einer Anordnung der Membranen in einer gemeinsamen, weitgehend der Teilungsebene zwischen dem Gehäuseunterteil und der Zwischenplatte entsprechenden Membranebene unter Einspannung zwischen dem Gehäuseunterteil und der Zwischenplatte in Längsrichtung hintereinander angeordnet. Das
Vorsteuerventil des Einlassventils und das Vorsteuerventil des Auslassventils sind mit jeweils vertikaler Ausrichtung ihrer Betätigungsachsen und gleichen Schaltrichtungen in etwa mittig oberhalb der Membranventile radial benachbart zueinander in dem Gehäuseoberteil angeordnet. Die Zwischenplatte ist mit dem
Gehäuseunterteil verschraubt. Das Gehäuseoberteil ist über einen äußeren Deckel mit der Zwischenplatte oder dem Gehäuseunterteil verschraubt. In der Teilungsebene zwischen dem Gehäuseoberteil und der Zwischenplatte sind Dichtungen angeordnet.

Bei einer Ventileinheit der vorgenannten Bauart kann es sich aber auch um ein Relaisventil handeln, bei dem ein in dem Basisgehäuse angeordnetes Hauptventil als Kolbenventil mit einem in der Betätigungsachse verschiebbar gelagerten Kolben und einem durch diesen betätigbaren federbelasteten Doppelventil ausgebildet sind, und bei dem das zugeordnete, in dem Gehäusedeckel angeordnete Vorsteuerventil als ein 3/2-Wege-Magnetventil ausgebildet ist. Ein Relaisventil hat die Funktion, bei großen Bremszylindervolumen der an den Bremsdruckausgang angeschlossenen Radbremszylinder die Ansprechdauer bei Bremsvorgängen wie auch beim Lösen der Bremsen zu verkürzen, also ein schnelles Be- und Entlüften der angeschlossenen Radbremszylinder zu bewirken.

Die Ventileinheit der vorliegend betrachteten Bauart besteht aus zwei miteinander verbundenen Hauptbauteilen, nämlich dem die Druckluftanschlüsse aufweisenden und das mindestens eine Hauptventil enthaltenden Basisgehäuse sowie dem mindestens ein Vorsteuerventil enthaltenden Gehäusedeckel. Das Basisgehäuse ist zumeist als Leichtmetall-Druckgussbauteil hergestellt. Der Gehäusedeckel besteht üblicherweise aus einem Kunststoff, mit dem beispielsweise ein das wenigstens eine Vorsteuerventil enthaltendes Einlegeteil umspritzt ist. Die Verbindung des Gehäusedeckels mit dem Basisgehäuse erfolgt gewöhnlich mittels einer Flanschverschraubung, bei welcher in Flanschbohrungen des Gehäusedeckels eingesetzte Schrauben mit Gewindebohrungen des Basisgehäuses verschraubt sind. Aufgrund der Belastung durch die in der Steuerkammer des Hauptventils herrschenden Steuerdrücke erfordert eine Flanschverschraubung jedoch relativ viele Schrauben. Hinzu kommt, dass die Flanschbohrungen des Gehäusedeckels aufgrund der Fließeigenschaften von Kunststoff mit Metallhülsen verstärkt sein müssen, um Beschädigungen des Gehäusedeckels zu vermeiden. Bei Verwendung von M6-Schrauben, einem Durchmesser der Flanschbohrungen von 6,5 mm und einer Wandstärke der Metallhülsen von 1,5 mm ergibt dies bei zwei gegenüberliegenden Schrauben nachteilig eine zusätzliche Breite des Gehäusedeckels von 19 mm, wobei die Abmessungen der Schraubenköpfe noch nicht berücksichtigt sind.

Der Erfindung liegt daher die Aufgabe zugrunde, für eine Ventileinheit zur Druckmodulation in einer Druckluft-Bremsanlage der eingangs genannten Bauart eine Bauraum sparende und kostengünstig herstellbare Vorrichtung zur Befestigung des Gehäusedeckels auf dem Basisgehäuse vorzuschlagen.

Diese Aufgabe ist in Verbindung mit den Merkmalen des Oberbegriffs des Anspruchs 1 dadurch gelöst, dass zur Befestigung des Gehäusedeckels auf dem Basisgehäuse ein Bügelelement vorgesehen ist, das im montierten Zustand an dem Basisgehäuse befestigt ist und mit einer weitgehend ebenen Druckplatte unter Erzeugung einer federelastischen Vorspannkraft an einer parallel zu der Teilungsebene des Ventilgehäuses ausgerichteten ebenen Außenwand des Gehäusedeckels anliegt.

Vorteilhafte Ausgestaltungen und Weiterbildungen der erfindungsgemäßen Ventileinheit sind Gegenstand der Unteransprüche.

Die Erfindung geht demnach von einer an sich bekannten Ventileinheit zur Druckmodulation in einer Druckluft-Bremsanlage aus, die einen Bremsdruckeingang, einen Bremsdruckausgang und einen Entlüftungsausgang sowie mindestens ein pneumatisch ansteuerbares Hauptventil und ein dem Hauptventil zugeordnetes, als Magnetventil ausgebildetes Vorsteuerventil aufweist. Die Drucklufteingänge und Druckluftausgänge sowie das mindestens eine Hauptventil und das zugeordnete Vorsteuerventil sind in einem Ventilgehäuse angeordnet, das mit einer in Einbaulage weitgehend horizontalen Teilungsebene in ein Basisgehäuse und einen Gehäusedeckel unterteilt ist. Der Bremsdruckeingang und der Bremsdruckausgang sowie der Entlüftungsausgang sind in dem Basisgehäuse angeordnet. Das mindestens eine Hauptventil ist in dem Basisgehäuse zwischen dem Bremsdruckeingang und dem Bremsdruckausgang mit senkrecht zu der Teilungsebene ausgerichteter Betätigungsachse angeordnet. Das mindestens eine Vorsteuerventil ist in dem Gehäusedeckel angeordnet. Und mindestens eine Steuerkammer des Hauptventils wird durch eine der Teilungsebene zugewandte Innenwand des Gehäusedeckels begrenzt.

Bei dieser Ventileinheit kann es sich um ein Regelventil eines Antiblockiersystems handeln, das zwei als Membranventile ausgebildete Hauptventile, nämlich ein Einlassventil und ein Auslassventil, sowie um zwei jeweils als ein 3/2-Wege-Magnetventil ausgebildete Vorsteuerventile aufweist. Ebenso kann es sich bei der Ventileinheit aber auch um ein Relaisventil handeln, das ein als Kolbenventil ausgebildetes Hauptventil sowie ein als 3/2-Wege-Magnetventil ausgebildetes Vorsteuerventil aufweist.

Abweichend zu der üblichen Befestigung des Gehäusedeckels auf dem Basisgehäuse mittels einer Flanschverschraubung, die aufgrund der vielen dafür erforderlichen Schrauben, Gewindebohrungen und Flanschabschnitte relativ aufwendig ist und die Außenabmessungen des Ventilgehäuses vergrößert, ist nun gemäß der Erfindung vorgesehen, dass der Gehäusedeckel mittels eines Bügelelements mit dem Basisgehäuse verbunden ist. Das Bügelelement ist im montierten Zustand an dem Basisgehäuse befestigt und liegt dann mit einer weitgehend ebenen Druckplatte unter Erzeugung einer federelastischen Vorspannkraft an einer parallel zu der Teilungsebene des Ventilgehäuses ausgerichteten ebenen Außenwand des Gehäusedeckels an.

Somit wird der Gehäusedeckel nun im Wesentlichen über ein einziges Bauteil, nämlich das Bügelelement, an dem Basisgehäuse befestigt. Dabei stellt die bei der Montage aufgebrachte Vorspannkraft, durch die der Gehäusedeckel und das Basisgehäuse weitgehend senkrecht zur Teilungsebene gegeneinander gepresst werden, sicher, dass beispielsweise nahe der Teilungsebene zwischen dem Basisgehäuse eingespannte Membranen von Membranventilen sieher fixiert sind, und dass aus von der Innenwand des Gehäusedeckels begrenzten Steuerkammern der Hauptventile sowie aus die Teilungsebene kreuzenden Steuerkanälen keine Druckluft entweicht.

Wie nachfolgend noch deutlich wird, kann das Bügelelement relativ dünnwandig ausgebildet sein. Es liegt im montierten Zustand vergleichsweise eng an dem Ventilgehäuse an. Gegenüber einer Flanschverschraubung mit beispielsweise acht Schrauben wird somit die Montage des Gehäusedeckels auf dem Basisgehäuse deutlich vereinfacht und Bauraum eingespart. Ebenso kann das Ventilgehäuse dadurch für Wartungs- und Reparaturzwecke, insbesondere für eine Revision der Ventileinheit, bei der beispielsweise die Membranen von Membranventilen erneuert werden können, mit geringem Montageaufwand geöffnet und anschließend wieder geschlossen werden.

Gemäß einer ersten und einer zweiten Ausführungsform ist das Bügelelement jeweils in Längsrichtung des Ventilgehäuses seitlich mit jeweils einem Gelenkarm versehen, welche den Gehäusedeckel und das Basisgehäuse seitlich umfassen und über eine jeweils in eine Gelenkbohrung eingreifende Gelenkachse schwenkbar an dem Basisgehäuse befestigt sind. In Längsrichtung den Gelenkarmen gegenüberliegend ist das Bügelelement jeweils auf unterschiedliche Art starr an dem Basisgehäuse befestigbar.

In der ersten Ausführungsform ist das Bügelelement in Längsrichtung den Gelenkarmen gegenüberliegend mit einer Befestigungslasche versehen, die weitgehend parallel zu der Druckplatte ausgerichtet ist und mindestens eine Bohrung aufweist, über die das Bügelelement mittels einer Schraube unter Erzeugung einer federelastischen Vorspannkraft mit dem Basisgehäuse verschraubbar ist.

Um die Abmessungen der Befestigungslasche klein und das Bügelelement stabil zu halten weist das Basisgehäuse bei dieser ersten Ausführungsform vorteilhaft in Längsrichtung der Gelenkachse gegenüberliegend einen pfostenförmigen Vorsprung auf, der die Teilungsebene senkrecht in Richtung des Gehäusedeckels überragt und mit mindestens einer Gewindebohrung zur Verschraubung der Befestigungslasche versehen ist.

In der zweiten Ausführungsform der erfindungsgemäßen Vorrichtung zur Befestigung des Gehäusedeckels auf dem Basisgehäuse ist das Bügelelement in Längsrichtung den Gelenkarmen gegenüberliegend mit einer Befestigungslasche versehen, die weitgehend senkrecht zu der Druckplatte in Richtung der Teilungsebene abgewinkelt ist und einen deckelseitig nach innen gerichteten Verriegelungshaken aufweist, mit dem das Bügelelement durch den Eingriff in eine entgegengerichtete Rastvertiefung unter Erzeugung einer federelastischen Vorspannkraft mit dem Basisgehäuse verrastbar ist.

Um auch in diesem Fall die Abmessungen der Befestigungslasche klein und das Bügelelement stabil zu halten weist das Basisgehäuse bei dieser Ausführungsform vorteilhaft in Längsrichtung der Gelenkachse gegenüberliegend einen wandförmigen Vorsprung auf, der die Teilungsebene senkrecht in Richtung des Gehäusedeckels überragt und mit der Rastvertiefung zur Verrastung der Befestigungslasche versehen ist.

Zur kostengünstigen Herstellung und Bauraum sparenden Ausführung des Bügelelementes ist bei beiden Ausführungsformen der Befestigung des Gehäusedeckels auf dem Basisgehäuse vorgesehen, dass das Bügelelement mit der Druckplatte, den Gelenkarmen und der Befestigungslasche einstückig als Blechpress- und Blechstanzbauteil, beispielsweise aus einem Stahl- oder Aluminiumblech hergestellt ist.

Die Gelenkbohrungen der Gelenkarme sind jeweils vorteilhaft mit einem zylindrischen Durchzug bzw. Hülse versehen. Hierdurch werden die Kontaktflächen zwischen den Gelenkbohrungen und der Gelenkachse gegenüber einer einfachen Ausstanzung der Gelenkbohrungen vergrößert und somit Beschädigungen sowie Verschleiß an den Gelenkbohrungen vermieden.

Gemäß einer dritten Ausführungsform der erfindungsgemäßen Befestigungsvorrichtung ist das Bügelelement in Längsrichtung des Ventilgehäuses beidseitig mit jeweils zwei Befestigungsarmen versehen, die den Gehäusedeckel und das Basisgehäuse seitlich umfassen sowie mit knieförmig nach innen gerichteten Abwinkelungen jeweils eine der Teilungsebene abgewandte, weitgehend ebene Bodenwand des Basisgehäuses umgreifen, sowie endseitig in zugeordnete Öffnungen einer ebenen Bodenplatte eingreifen, die an der Bodenwand des Basisgehäuses befestigt ist. Bei dieser Variante wird die federelastische Vorspannkraft zum Zusammenhalten von Basisgehäuse und Gehäusedeckel dadurch erzeugt, dass die Befestigungsarme des Bügelelementes gespannt werden müssen, um deren knieförmige Abwinkelungen über die Außenkante der Bodenwand schieben zu können. Durch den endseitigen Eingriff der knieförmigen Abwinkelungen in die Öffnungen der Bodenplatte und die Befestigung der Bodenplatte an der Bodenwand des Basisgehäuses sind die Befestigungsarme formschlüssig gegen ein Lösen beziehungsweise Abrutschen über die Außenkante der Bodenwand gesichert.

Die Bodenplatte weist in Längsrichtung beidseitig jeweils mindestens eine Bohrung auf, über welche die Bodenplatte mittels jeweils einer Schraube mit dem Basisgehäuse verschraubbar ist.

Sofern das Basisgehäuse mindestens einen durch eine Öffnung in der Bodenwand nach außen offenen Verbindungskanal aufweist, ist bevorzugt vorgesehen, dass dieser Verbindungskanal des Basisgehäuses im montierten Zustand durch die Bodenplatte verschlossen ist, und dass zwischen den Verbindungskanal begrenzenden Gehäusewänden des Basisgehäuses und der Bodenplatte Dichtelemente angeordnet sind.

Zur kostengünstigen Herstellung und Bauraum sparenden Ausführung des Bügelelementes und der Bodenplatte ist bei dieser Variante der Befestigungsvorrichtung vorgesehen, dass das Bügelelement mit den Befestigungsarmen sowie die Bodenplatte jeweils einstückig als Blechpress- und Blechstanzbauteil beispielsweise aus einem Stahl- oder Aluminiumblech hergestellt sind.

Bei allen vorgenannten Ausführungsformen kann die Druckplatte des Bügelelementes zur mittigen Einleitung einer federelastischen Vorspannkraft in Richtung zu der Außenwand des Gehäusedeckels gewölbt sein.

Alternativ dazu kann die Druckplatte des Bügelelementes zur lokalen Einleitung einer federelastischen Vorspannkraft auch mindestens eine zur Außenwand des Gehäusedeckels gerichtete Auswölbung aufweisen.

Um die federelastische Vorspannkraft optimal in den Gehäusedeckel einzuleiten, ist die mindestens eine Auswölbung bevorzugt derart positioniert in der Druckplatte ausgebildet, dass sie im montierten Zustand des Bügelelementes weitgehend mittig über einer von der Innenwand des Gehäusedeckels begrenzten Steuerkammer eines Hauptventils liegt. Bei einem Druckregelventil eines Antiblockiersystems mit zwei in Längsrichtung des Ventilgehäuses hintereinander angeordneten, jeweils als Membranventil ausgebildeten Hauptventilen, also mit einem Einlassventil und einem Auslassventil, deren Membranen weitgehend in der Teilungsebene des Ventilgehäuses angeordnet sind, und deren Betätigungsachsen achsparallel zueinander und senkrecht zu der Teilungsebene ausgerichtet sind, weist die Druckplatte des Bügelelementes demnach vorteilhaft zwei Auswölbungen auf, die im montierten Zustand des Bügelelementes mittig zu den Betätigungsachsen der Membranventile und somit mittig über den zugeordneten Steuerkammern liegen.

Weiter kann vorgesehen sein, dass der Gehäusedeckel ein zentrales, mit Ventilbohrungen und Steuerkanälen versehenes Einlegeteil aufweist, in das die Magnetspulen und die mechanischen Bauteile der Vorsteuerventile, wie der jeweilige Ventilkern, der jeweilige Ventilanker und die jeweilige Ventilfeder, eingesetzt sind, und das mit einem Kunststoff umspritzt ist.

Schließlich kann vorgesehen sein, dass der Bremsdruckeingang und der Bremsdruckausgang mit horizontaler Ausrichtung in einer Längsrichtung weitgehend axial gegenüberliegend sowie der Entlüftungsausgang dazwischen vertikal nach unten gerichtet in dem Basisgehäuse angeordnet sind.

Zur weiteren Verdeutlichung der Erfindung ist der Beschreibung eine Zeichnung mit mehreren Ausführungsbeispielen beigefügt. In dieser zeigt
Fig. 1 eine Ventileinheit mit einer ersten Ausführungsform eines Bügelelementes zur Befestigung eines Gehäusedeckels auf einem Basisgehäuse in einer perspektivischen Ansicht,
Fig. 2 die erste Variante des Bügelelementes nach gemäß Fig. 1 in einer perspektivischen Ansicht,
Fig. 3 eine zweite Variante eines Bügelelementes einer Ventileinheit zur Befestigung eines Gehäusedeckels auf einem Basisgehäuse in einer perspektivischen Ansicht,
Fig. 4 eine dritte Variante eines Bügelelementes einer Ventileinheit zur Befestigung eines Gehäusedeckels auf einem Basisgehäuse in einer perspektivischen Ansicht,
Fig. 5 eine Ventileinheit mit dem Bügelelement gemäß Fig. 4 in einer teilweise geschnittenen Seitenansicht,
Fig. 6 eine erste Weiterbildung des Bügelelementes gemäß den Figuren 1 und 2 in einer perspektivischen Ansicht,
Fig. 7 eine zweite Weiterbildung des Bügelelementes gemäß den Figuren 1 und 2 in einer perspektivischen Ansicht,
Fig. 8 beispielhaft eine Ausführungsform einer Ventileinheit in einem ersten vertikalen Längsschnitt,
Fig. 9 die Ventileinheit gemäß Fig. 8 in einem zweiten vertikalen Längsschnitt, und
Fig. 10 die Ventileinheit gemäß den Figuren 8 und 9 in einem Horizontalschnitt.

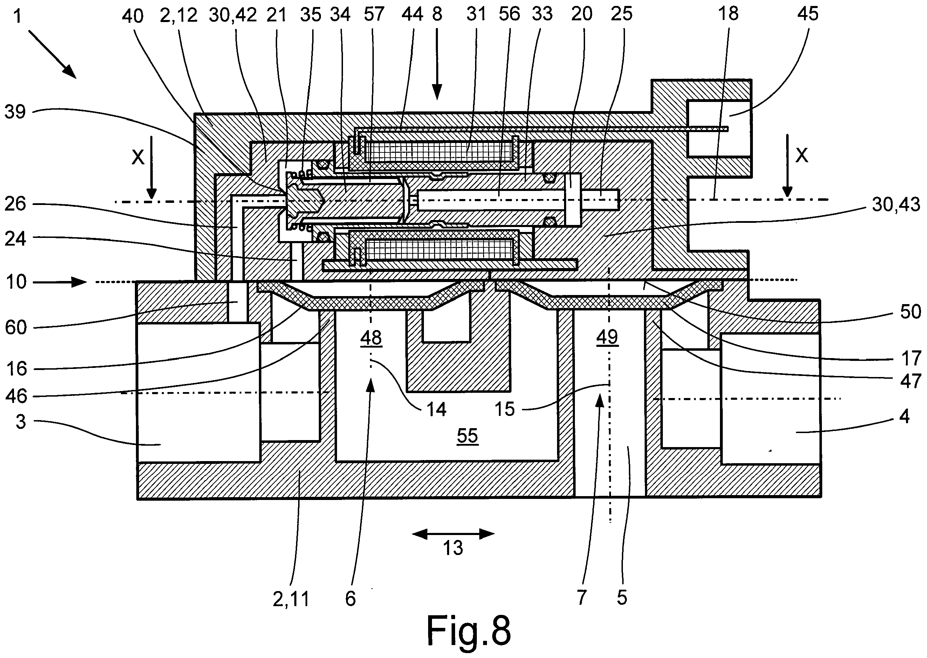

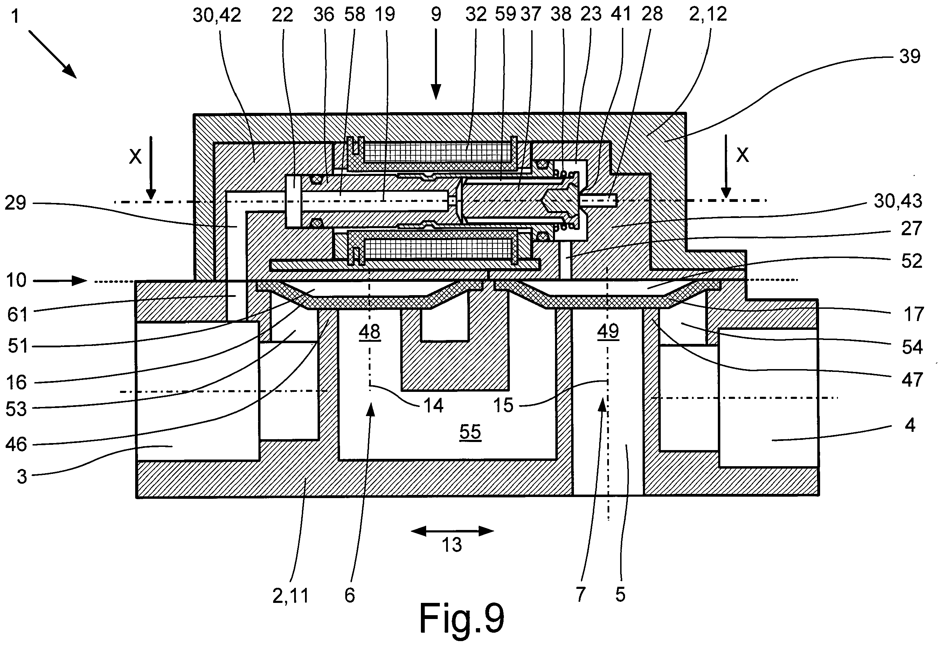

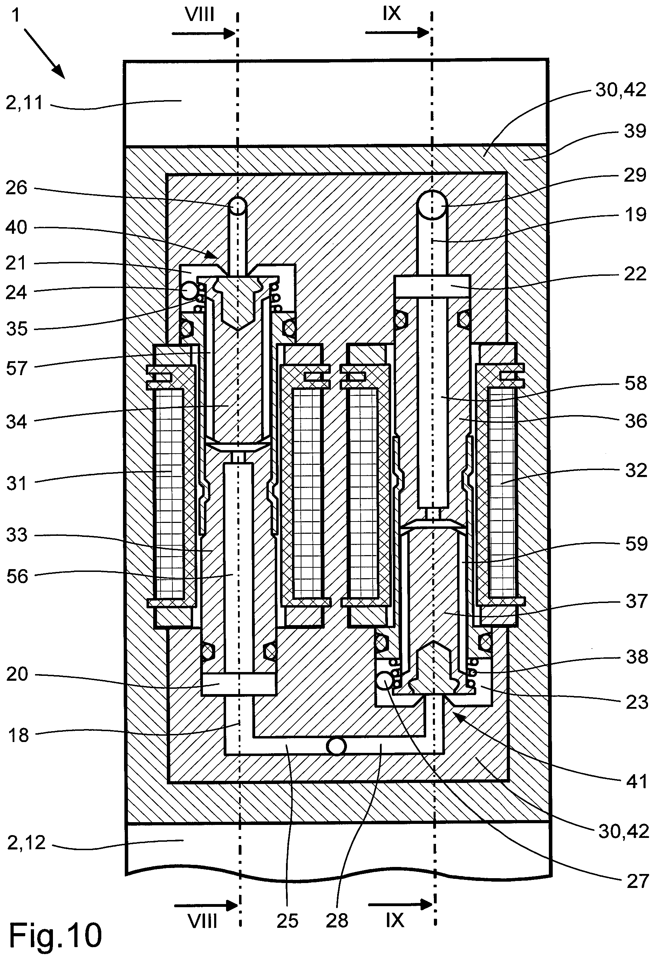

Nachfolgend wird zunächst anhand der Figuren 8 bis 10 der prinzipielle Aufbau und die Funktionsweise einer Ventileinheit 1 beschrieben, die nachfolgend beispielhaft zur Erläuterung der erfindungsgemäßen Befestigung eines Gehäusedeckels 11 auf einem Basisgehäuse 12 verwendet wird. Die Ventileinheit 1 ist in Fig. 8 in einem ersten vertikalen Längsschnitt VIII - VIII gemäß Fig. 10 und in Fig. 9 in einem zweiten vertikalen Längsschnitt IX - IX gemäß Fig. 10 dargestellt, während die Ventileinheit in Fig. 10 in einem Horizontalschnitt X - X gemäß Fig. 8 und Fig. 9 abgebildet ist.

In einem länglichen Ventilgehäuse 2 sind ein Bremsdruckeingang 3, ein Bremsdruckausgang 4 und ein Entlüftungsausgang 5, sowie ein als Membranventil ausgebildetes Einlassventil 6, ein als Membranventil ausgebildetes Auslassventil 7 und jeweils ein als 3/2-Wege-Magnetventil ausgebildetes Vorsteuerventil 8, 9 für jedes Membranventil 6, 7 angeordnet. Das Ventilgehäuse 2 ist mit einer in Einbaulage weitgehend horizontalen Teilungsebene 10 in ein Basisgehäuse 11 und einen Gehäusedeckel 12 unterteilt. Der Bremsdruckeingang 3 und der Bremsdruckausgang 4 sind in Längsrichtung 13 des Ventilgehäuses 2 mit horizontaler Ausrichtung weitgehend axial gegenüberliegend und der Entlüftungsausgang 5 dazwischen und vertikal nach unten gerichtet in dem Basisgehäuse 11 angeordnet. Die Membranventile 6, 7 sind in dem Basisgehäuse 11 zwischen dem Bremsdruckeingang 3 und dem Bremsdruckausgang 4 mit parallelen Betätigungsachsen 14, 15 und einer Anordnung der Membranen 16, 17 in einer gemeinsamen, weitgehend der Teilungsebene 10 entsprechenden Membranebene unter Einspannung zwischen dem Basisgehäuse 11 und dem Gehäusedeckel 12 in Längsrichtung 13 hintereinander angeordnet. Die Vorsteuerventile 8, 9 sind dagegen in dem Gehäusedeckel 12 angeordnet.

Das Vorsteuerventil 8 des Einlassventils 6 und das Vorsteuerventil 9 des Auslassventils 7 sind in Längsrichtung 13 mit paralleler Ausrichtung ihrer Betätigungsachsen 18, 19 zu der Teilungsebene 10 weitgehend mittig über den Membranen 16, 17 des Einlassventils 6 und des Auslassventils 7 in dem Gehäusedeckel 12 angeordnet. Der Gehäusedeckel 12 weist ein zentrales, mit Ventilbohrungen 20, 21; 22, 23 und Steuerkanälen 24, 25, 26; 27, 28, 29 versehenes Einlegeteil 30 auf, in das die Magnetspulen 31, 32 und die mechanischen Bauteile der Vorsteuerventile 8, 9, wie der jeweilige Ventilkern 33, 36, der jeweilige Ventilanker 34, 37, und die jeweilige Ventilfeder 35, 38, eingesetzt sind, und das mit einem Kunststoff 39 umspritzt ist.

Vorliegend sind die beiden Vorsteuerventile 8, 9 als separate Magnetventile ausgebildet, die mit entgegengesetzter Schaltrichtung und jeweils der Membran 16, 17 des zugeordneten Einlass- oder Auslassventils 6, 7 zugewandtem Ventilsitz 40, 41 achsparallel sowie radial benachbart zueinander in dem Einlegeteil 30 angeordnet sind. Das Einlegeteil 30 besteht aus einem eingangseitigen Teil 42 und einem ausgangsseitigen Teil 43, welche die Magnetspulen 31, 32 und die genannten mechanischen Bauteile 33, 34, 35; 36, 37, 38 der Magnetventile 8, 9 stirnseitig umfassen. Innerhalb der Umspritzung 39 des Gehäusedeckels 12 sind Anschlusskabel 44 der Magnetspulen 31, 32 verlegt, die in einer mit der Umspritzung 39 angeformten Anschlussbuchse 45 enden.

Die Membranen 16, 17 des Einlassventils 6 und des Auslassventils 7 liegen aufgrund ihrer Formgebung jeweils an einem Ventilsitz 46, 47 eines zylindrischen Zentralkanals 48, 49 an, der jeweils durch die Beaufschlagung einer von der betreffenden Membran 16, 17 und einer der Teilungsebene 10 zugewandten Innenwand 50 des Gehäusedeckels 12 begrenzten Steuerkammer 51, 52 mit einem niedrigen oder hohen Steuerdruck mit einem koaxial zu diesem angeordneten zylindrischen Ringkanal 53, 54 verbindbar oder gegenüber diesem absperrbar ist.

Der Ringkanal 53 des Einlassventils 6 ist mit dem Bremsdruckeingang 3 verbunden. Der Zentralkanal 48 des Einlassventils 6 steht über einen Verbindungskanal 55 mit dem Ringkanal 54 des Auslassventils 7 in Verbindung, der wiederum mit dem Bremsdruckausgang 4 verbunden ist. Der Zentralkanal 49 des Auslassventils 7 ist mit dem Entlüftungsausgang 5 verbunden. Somit ist der Bremsdruckausgang 4 über das Einlassventil 6 wechselweise mit dem Bremsdruckeingang 3 verbindbar oder gegenüber diesem absperrbar. Ebenso ist der Bremsdruckausgang 4 über das Auslassventil 7 wechselweise mit dem Entlüftungsausgang 5 verbindbar oder gegenüber diesem absperrbar. In der vorliegenden Ausführung der Ventileinheit 1 reicht das Einlegeteil 30 des Gehäusedeckels 12 bis an die Teilungsebene 10 zwischen dem Basisgehäuse 11 und dem Gehäusedeckel 12 heran und begrenzt die Steuerkammern 51, 52 der Membranventile 8, 9 vollständig.

Die Ventileinheit 1 weist die Schaltfunktionen "Druckaufbau", "Druckhalten" und "Druckabbau" auf. In der Schaltfunktion "Druckaufbau" der Ventileinheit 1 sind das Einlassventil 6 geöffnet und das Auslassventil 7 geschlossen, so dass der über ein Bremsventil am Bremsdruckeingang 3 eingesteuerte Bremsdruck unverändert an den Bremsdruckausgang 4 sowie an mindestens einen daran angeschlossenen Radbremszylinder weitergeleitet wird. Da die Schaltfunktion "Druckaufbau" dem Ruhezustand der Ventileinheit 1 entspricht, verbindet das Vorsteuerventil 8 des Einlassventils 6 im unbestromten Zustand seiner Magnetspule 31 die Steuerkammer 51 des Einlassventils 6 über den Steuerkanal 24, die Ventilbohrung 21, Längsnuten 57 in dem Ventilanker 34 und eine Zentralbohrung 56 in dem Ventilkern 33 mit einem einen niedrigen Steuerdruck führenden Steuerkanal 25, der in nicht dargestellter Weise an den Entlüftungsausgang 5 angeschlossen ist. Die in den Figuren 8 und 9 aufgrund ihrer Formgebung an dem Ventilsitz 46 des Einlassventils 6 anliegend dargestellte Membran 16 wird in diesem Fall durch einen in dem Ringkanal 53 vorliegenden Bremsdruck in Richtung der Steuerkammer 51 verschoben, wodurch das Einlassventil 6 geöffnet wird.

Ebenso verbindet das Vorsteuerventil 9 des Auslassventils 7 im unbestromten Zustand seiner Magnetspule 32 die Steuerkammer 52 des Auslassventils 7 über den Steuerkanal 27, die Ventilbohrung 23, Längsnuten 59 in dem Ventilanker 37, und eine Zentralbohrung 58 in dem Ventilkern 36 mit einem einen hohen Steuerdruck führenden Steuerkanal 29, der über einen weiteren, in dem Basisgehäuse 11 angeordneten Steuerkanal 61 an den Bremsdruckeingang 3 angeschlossen ist.

In der Schaltfunktion "Druckhalten" der Ventileinheit 1 sind das Einlassventil 6 und das Auslassventil 7 geschlossen, so dass der am Bremsdruckausgang 4 und dem mindestens einen daran angeschlossenen Radbremszylinder anliegende Bremsdruck dann konstant gehalten wird. Zur Einstellung dieser Schaltfunktion wird nur das Vorsteuerventil 8 des Einlassventils 6 durch Bestromung seiner Magnetspule 31 umgeschaltet, wodurch der betreffende Ventilanker 34 entgegen der Rückstellkraft der Ventilfeder 35 axial von dem Ventilsitz 40 nach innen gezogen wird. Dadurch wird die Steuerkammer 51 des Einlassventils 6 über den Steuerkanal 24 und die Ventilbohrung 21 mit einem den hohen Steuerdruck führenden Steuerkanal 26 verbunden, der über einen weiteren, in dem Basisgehäuse 11 angeordneten Steuerkanal 60 an den Bremsdruckeingang 3 angeschlossen ist.

In der Schaltfunktion "Druckabbau" der Ventileinheit 1 sind das Einlassventil 6 geschlossen und das Auslassventil 7 geöffnet, so dass der Bremsdruckausgang 4 und der mindestens eine daran angeschlossene Radbremszylinder dann über den Entlüftungsausgang 5 entlüftet werden. Zur Einstellung dieser Schaltfunktion werden beide Vorsteuerventile 8, 9 durch Bestromung ihrer Magnetspulen 31, 32 umgeschaltet. Durch die Bestromung der Magnetspule 32 des dem Auslassventil 7 zugeordneten Vorsteuerventils 9 wird der betreffende Ventilanker 37 entgegen der Rückstellkraft der Ventilfeder 38 axial von dem Ventilsitz 41 nach innen gezogen, wodurch die Steuerkammer 52 des Auslassventils 7 über den Steuerkanal 27 und die Ventilbohrung 23 mit einem den niedrigen Steuerdruck führenden Steuerkanal 28 verbunden wird, der in nicht dargestellter Weise an den Entlüftungsausgang 5 angeschlossen ist.

Die Schaltfunktionen "Druckhalten" und "Druckabbau" der Ventileinheit 1 sind Blockierschutzfunktionen, mit denen ein bremsbedingtes Blockieren des mindestens einen zugeordneten Rades vermieden werden soll. Diese Schaltfunktionen werden durch eine entsprechende Ansteuerung der beiden Vorsteuerventile 8, 9 von einem Steuergerät eines Antiblockiersystems gesteuert, in dem die Signale von Raddrehzahlsensoren zur Erkennung eines bevorstehenden oder schon eingetretenen Blockierens der gebremsten Räder ausgewertet werden.

Durch die in Einbaulage der Ventileinheit 1 liegende, also in Längsrichtung 13 zu der Teilungsebene 10 des Ventilgehäuses 2 parallele Anordnung der beiden Vorsteuerventile 8, 9 ergibt sich eine sehr niedrige Bauhöhe des Ventildeckels 12 und damit besonders kompakte Abmessungen der gesamten Ventileinheit 1. Dies ist besonders vorteilhaft, da derartige Ventileinheiten 1 zur Erzielung einer kurzen Reaktionszeit der betreffenden Radbremsen bei der Steuerung der Blockierschutzfunktionen möglichst nahe an den zugeordneten Radbremszylindern angeordnet werden, und der dort verfügbare Bauraum meistens gering ist.

Durch die Ausrichtung der Magnetventile 8, 9 mit benachbart zu den Membranen 16, 17 beziehungsweise den Steuerkammern 50, 51 der zugeordneten Membranventile 6, 7 angeordneten Ventilsitzen 40, 41 ergeben sich für beide Vorsteuerventile 8, 9 besonders kleine, beim Umschalten zu belüftende oder zu entlüftende Pilotvolumina. Dies hat vorteilhaft besonders kurze Schaltreaktionszeiten der Membranventile 6, 7 beim Umschalten der Magnetventile 8, 9 zur Folge.

Durch die Umspritzung 39 des die Magnetspulen 31, 32 und die genannten mechanischen Bauteile 33, 34, 35, 36, 37, 38 der Vorsteuerventile 8, 9 enthaltenden Einlegeteils 30 ist die Montage der Ventileinheit 1 sowie deren Revision, bei der insbesondere die Membranen 16, 17 durch neue Exemplare ersetzt werden, wesentlich vereinfacht. Zudem kann mit der Umspritzung 39 des Einlegeteils 30 die Anschlussbuchse 45 der Magnetspulen 31, 32 entsprechend der Anforderung des jeweiligen Fahrzeugherstellers bedarfsweise mit unterschiedlicher Buchsenform und unterschiedlicher Ausrichtung an verschiedenen Orten des Gehäusedeckels 12 angeordnet werden. Zudem sind die beiden Magnetventile 8, 9 durch die Umspritzung 39 mit Kunststoff optimal gegen von außen eindringende Feuchtigkeit und Schmutzpartikel geschützt.

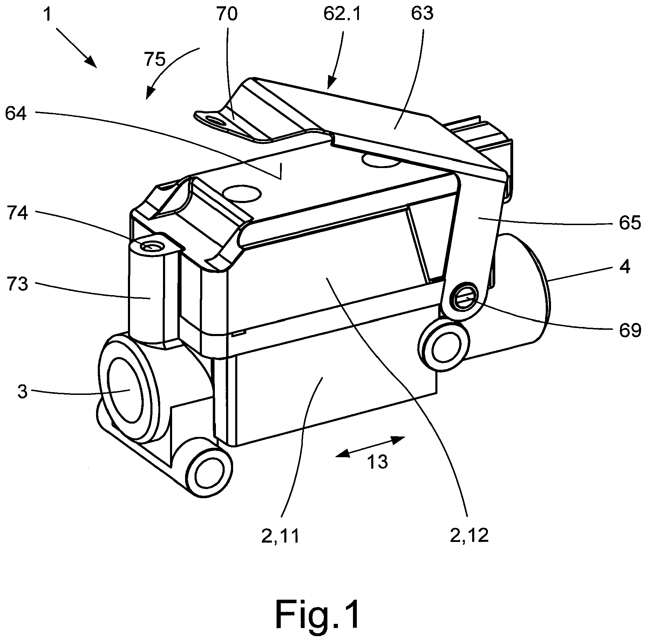

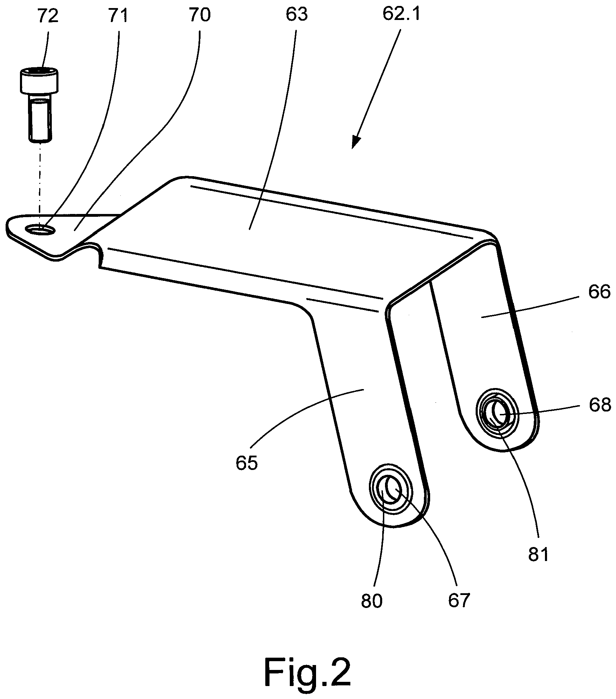

In Fig. 1 und Fig. 2 ist nun eine erste Ausführungsform einer erfindungsgemäßen Befestigungsvorrichtung dargestellt, mittels welcher der Gehäusedeckel 12 auf dem Basisgehäuse 11 einer den Figuren 8 bis 10 entsprechenden Ventileinheit 1 befestigbar ist. Hierzu sind in Fig. 1 die Ventileinheit 1 mit einer ersten Ausführungsform eines Bügelelementes 62.1 und in Fig. 2 das Bügelelement 62.1 im Detail abgebildet.

Im montierten Zustand ist das Bügelelement 62.1 an dem Basisgehäuse 11 befestigt und liegt mit einer weitgehend ebenen Druckplatte 63 unter Erzeugung einer federelastischen Vorspannkraft an einer parallel zu der Teilungsebene 10 des Ventilgehäuses 2 ausgerichteten ebenen Außenwand 64 des Gehäusedeckels 12 an. In Längsrichtung 13 des Ventilgehäuses 2 ist das Bügelelement 62.1 einseitig mit zwei Gelenkarmen 65, 66 versehen, die den Gehäusedeckel 12 seitlich vollständig und das Basisgehäuse 11 seitlich teilweise umfassen sowie über eine jeweils in eine Gelenkbohrung 67, 68 eingreifende Gelenkachse 69 schwenkbar an dem Basisgehäuse 12 befestigt sind. In Längsrichtung 13 den Gelenkarmen 65, 66 gegenüberliegend ist das Bügelelement 62.1 mit einer Befestigungslasche 70 versehen, die weitgehend parallel zu der Druckplatte 63 ausgerichtet ist und eine Bohrung 71 aufweist, über die das Bügelelement 62.1 mittels einer Schraube 72 unter Erzeugung einer federelastischen Vorspannkraft mit dem Basisgehäuse 11 verschraubbar ist.

Um die Befestigungslasche 70 kleiner und damit das Bügelelement 62.1 stabiler ausführen zu können, weist das Basisgehäuse 11 in Längsrichtung 13 der Gelenkachse 69 gegenüberliegend einen pfostenförmigen Vorsprung 73 auf, der die Teilungsebene 10 senkrecht in Richtung des Gehäusedeckels 12 überragt und mit einer Gewindebohrung 74 zur Verschraubung der Befestigungslasche 70 versehen ist. In der Abbildung von Fig. 1 hat das Bügelelement 62.1 seine montagebedingte Endposition noch nicht erreicht, sondern muss hierzu noch entsprechend dem Pfeil 75 bis zum Anliegen der Druckplatte 63 an der Außenwand 64 des Gehäusedeckels 12 geschwenkt werden. Anschließend wird die Befestigungslasche 70 unter Aufbringung einer federelastischen Vorspannkraft mit dem Vorsprung 73 des Basisgehäuses 11 verschraubt.

Das Bügelelement 62.1 mit der Druckplatte 63, den beiden Gelenkarmen 65, 66 und der Befestigungslasche 70 ist einstückig als Blechpress- und Blechstanzbauteil, zum Beispiel aus einem Stahl- oder Aluminiumblech hergestellt und somit kostengünstig sowie Platz sparend ausgeführt. Zur Reduzierung der Flächenpressung zwischen den Gelenkbohrungen 67, 68 der beiden Gelenkarme 65, 66 und der Gelenkachse 69 sind die Gelenkbohrungen 67, 68 anstelle einer einfachen Ausstanzung jeweils mit einem zylindrischen Durchzug 80, 81 versehen.

Gegenüber einer üblichen Flanschverschraubung des Gehäusedeckels 12 mit dem Basisgehäuse 11 ist die erfindungsgemäße Befestigung mittels des Bügelelements 62.1 kostengünstiger herstellbar, schneller montierbar und erfordert weniger Bauraum. Zudem kann das Ventilgehäuse 2 dadurch für Wartungs- und Reparaturzwecke, insbesondere für eine Revision der Ventileinheit, bei der beispielsweise die Membranen von Membranventilen erneuert werden können, mit geringerem Montageaufwand geöffnet und anschließend wieder geschlossen werden.

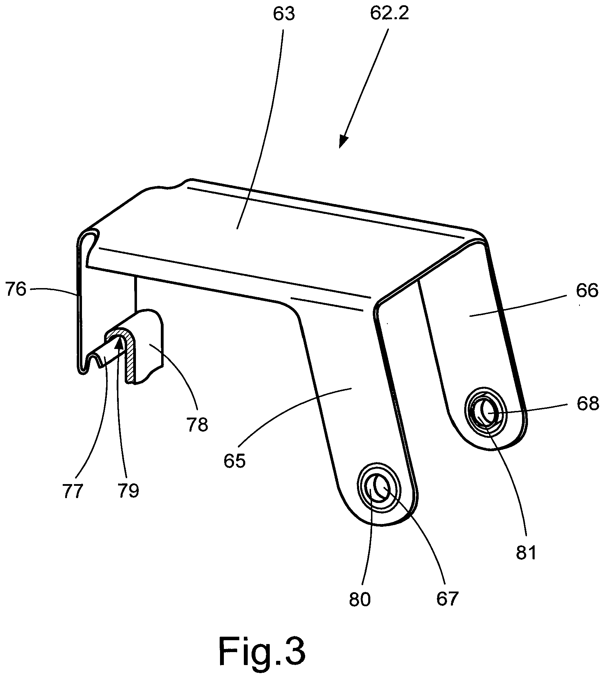

Eine in Fig. 3 abgebildete zweite Ausführungsform eines Bügelelements 62.2 unterscheidet sich von der ersten Ausführungsform gemäß Fig. 1 und Fig. 2 dadurch, dass die Befestigungslasche 76 nun weitgehend senkrecht zu der Druckplatte 63 in Richtung der Teilungsebene 10 abgewinkelt ausgebildet ist. Außerdem weist die Befestigungslasche 76 einen deckelseitig nach innen gerichteten Verriegelungshaken 77 auf, mit dem das Bügelelement 62.2 durch den Eingriff in eine entgegengerichtete Rastvertiefung 79 unter Erzeugung einer federelastischen Vorspannkraft mit dem Basisgehäuse 11 verrastbar ist. Um die Befestigungslasche 76 relativ klein und damit das Bügelelement 62.2 stabiler ausführen zu können, weist das Basisgehäuse 11 in Längsrichtung 13 der Gelenkachse 69 gegenüberliegend einen wandförmigen Vorsprung 78 auf, der die Teilungsebene 10 senkrecht in Richtung des Gehäusedeckels 12 überragt und mit der Rastvertiefung 79 zur Verrastung der Befestigungslasche 76 versehen ist.

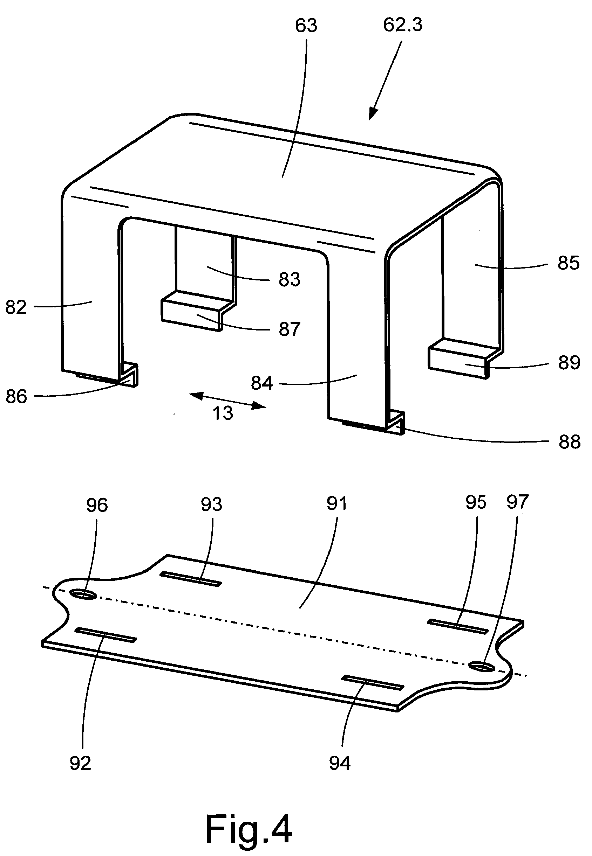

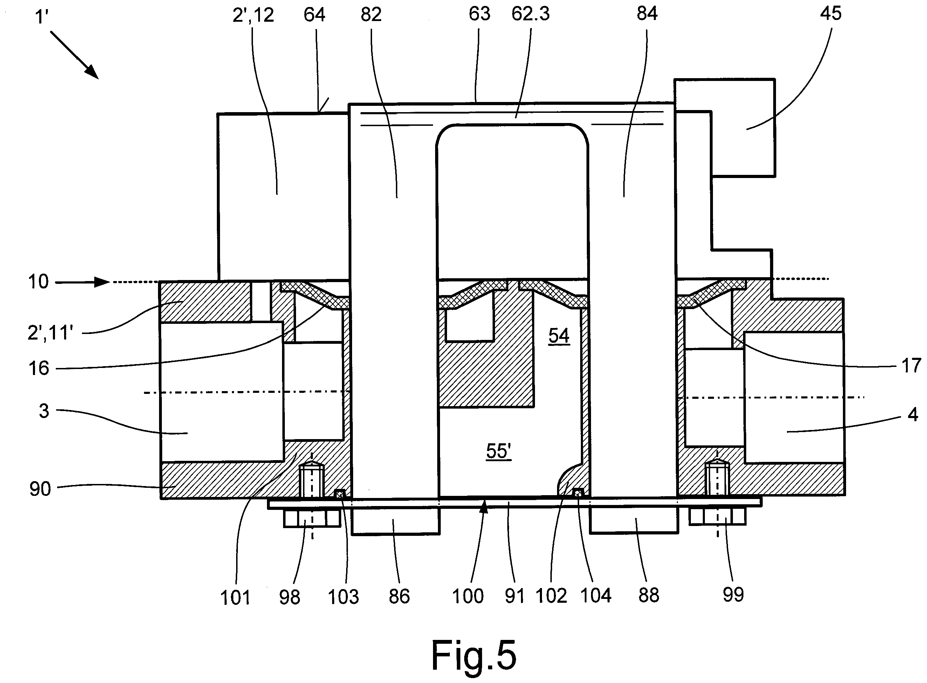

Eine in Fig. 4 und Fig. 5 abgebildete dritte Ausführungsform eines Bügelelements 62.3 unterscheidet sich von den ersten beiden Ausführungsformen gemäß Fig. 1 bis Fig. 3 dadurch, dass das Bügelelement 62.3 nun in Längsrichtung 13 des Ventilgehäuses 2' beidseitig mit jeweils zwei Befestigungsarmen 82, 84; 83, 85 versehen ist, die den Gehäusedeckel 12 und das Basisgehäuse 11' seitlich umfassen und mit knieförmig nach innen gerichteten Abwinkelungen 86, 88; 87, 89 jeweils eine der Teilungsebene 10 abgewandte, weitgehend ebene Bodenwand 90 des Basisgehäuses 11' umfassen, sowie endseitig in zugeordnete schlitzförmige Öffnungen 92, 94; 93, 95 einer ebenen Bodenplatte 91 eingreifen, die an der Bodenwand 90 des Basisgehäuses 11' befestigt ist.

Zur Montage des Bügelelementes 62.3 gemäß Fig. 4 und Fig. 5 werden die Befestigungsarme 82, 84; 83, 85 gespannt und über die Außenkante der Bodenwand 90 des Basisgehäuses 11' geschoben. Dadurch wird auch die Vorspannkraft zwischen der Druckplatte 63 des Bügelelementes 62.3 und der Außenwand 64 des Gehäusedeckels 12 erzeugt. Anschließend werden die Befestigungsarme 82, 84; 83, 85 unter Eingriff in die schlitzförmigen Öffnungen 92, 94; 93, 95 durch das Aufschieben und Befestigen der Bodenplatte 91 formschlüssig gesichert. Die Bodenplatte 91 weist in Längsrichtung 13 beidseitig jeweils eine Bohrung 96, 97 auf, über welche die Bodenplatte 91 mittels jeweils einer Schraube 98, 99 mit dem Basisgehäuse 11' verschraubt ist. Das Bügelelement 62.3 mit den vier Befestigungsarmen 82, 84; 83, 85 sowie die Bodenplatte 91 sind jeweils bevorzugt einstückig als Blechpress- und Blechstanzbauteil hergestellt und somit kostengünstig sowie Platz sparend ausgebildet.

In der in Fig. 5 dargestellten Seitenansicht ist die Ventileinheit 1' mit dem Bügelelement 62.3 und der Bodenplatte 91 im montierten Zustand abgebildet. Darin ist das Basisgehäuse 11' geschnitten dargestellt, um eine beispielhaft von dem Basisgehäuse 11 der Ventileinheit 1 gemäß den Figuren 8 bis 10 abweichende Ausführungsform zu verdeutlichen. Im Unterschied zu dem dort nach außen geschlossen ausgeführten Verbindungskanal 55, über den der Zentralkanal 48 des Einlassventils 6 mit dem Ringkanal 54 des Auslassventils 7 in Verbindung steht, ist der Verbindungskanal 55' nun aufgrund einer fertigungsbedingten Öffnung 100 in der Bodenwand 90 des Basisgehäuses 11' nach außen offen ausgebildet. Die Bodenplatte 91, die an sich nur zur Fixierung des Bügelelementes 62.3 dient, erfüllt nun die zusätzliche die Funktion, den Verbindungskanal 55' im montierten Zustand nach außen zu verschließen. Zur Abdichtung des Verbindungskanals 55' sind zwischen Gehäusewänden 101, 102, durch die der Verbindungskanal 55' begrenzt wird, und der Bodenplatte 91 Dichtelemente 103, 104 angeordnet, die vorliegend beispielhaft als in Quernuten der Gehäusewände 101, 102 eingelegte Dichtungsleisten ausgebildet sind.

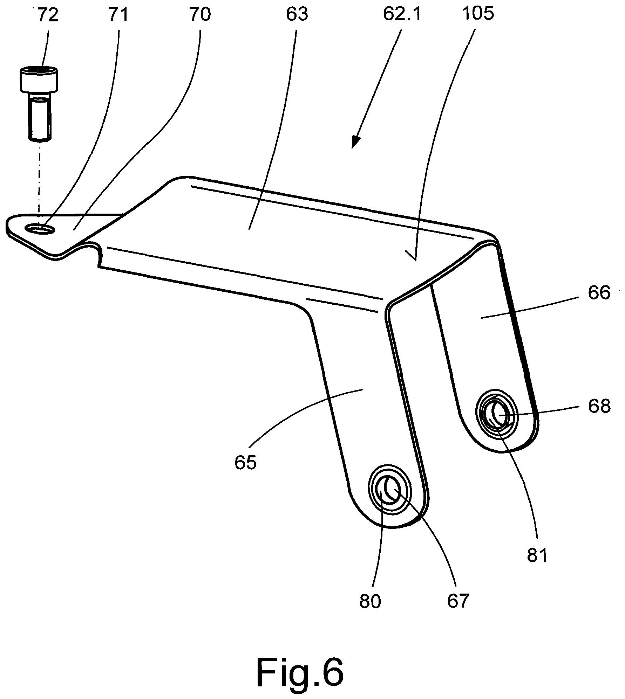

In Fig. 6 ist beispielhaft anhand der ersten Ausführungsform des Bügelelementes 62.1 der Figuren 1 und 2 dargestellt, dass die Druckplatte 63 des Bügelelementes 62.1 zur mittigen Einleitung einer federelastischen Vorspannkraft in Richtung der Außenwand 64 des Gehäusedeckels 12 gewölbt ausgebildet sein kann. Diese Wölbung ist stirnseitig gut erkennbar und durch das Bezugszeichen 105 markiert.

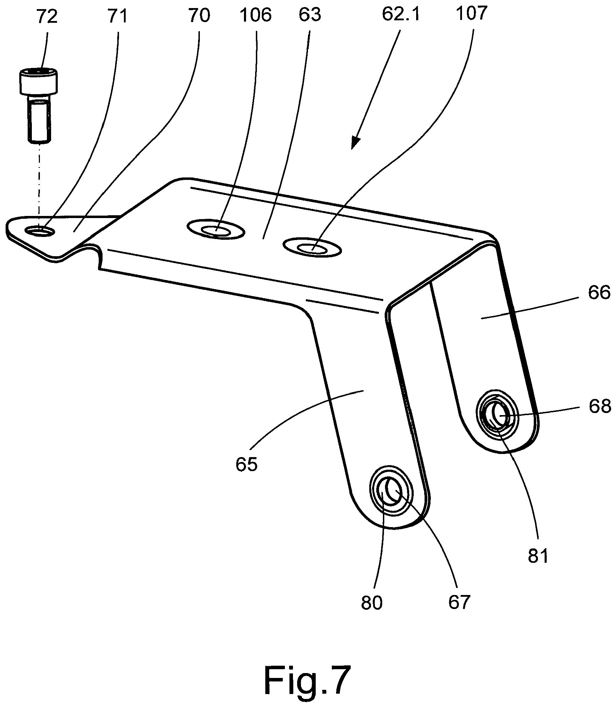

In der Abbildung der Fig. 7 weist beispielhaft die Druckplatte 63 der ersten Ausführungsform des Bügelelementes 62.1 nach Fig. 1 und Fig. 2 zur lokalen Einleitung einer federelastischen Vorspannkraft zwei zur Außenwand 64 des Gehäusedeckels 12 gerichtete Auswölbungen 106, 107 auf. Diese Auswölbungen 106, 107 sind bevorzugt derart in der Druckplatte 63 positioniert und ausgebildet, dass sie im montierten Zustand des Bügelelementes 62.1 weitgehend mittig über den von der Innenwand 50 des Gehäusedeckels 12 begrenzten Steuerkammern 51, 52 der Membranventile 6, 7 liegen, wodurch eine optimale Einleitung der Vorspannkraft in den Gehäusedeckel 12 gegeben ist.

Die Wölbung 105 der Druckplatte 63 und die Auswölbungen 106, 107 in der Druckplatte 63 können ebenso bei der zweiten Ausführungsform des Bügelelementes 62.2 gemäß Fig. 3 und bei der dritten Ausführungsform des Bügelelementes 62.3 gemäß den Figuren 4 und 5 zur Anwendung kommen.

### Bezugszeichen (Teil der Beschreibung)

- 1, 1': Ventileinheit
- 2, 2': Ventilgehäuse
- 3: Bremsdruckeingang
- 4: Bremsdruckausgang
- 5: Entlüftungsausgang
- 6: Hauptventil, Einlassventil, Membranventil
- 7: Hauptventil, Auslassventil, Membranventil
- 8: Vorsteuerventil von Einlassventil 6, Magnetventil
- 9: Vorsteuerventil von Auslassventil 7, Magnetventil
- 10: Teilungsebene
- 11, 11': Basisgehäuse
- 12: Gehäusedeckel
- 13: Längsrichtung von Ventilgehäuse 2
- 14: Betätigungsachse von Einlassventil 6
- 15: Betätigungsachse von Auslassventil 7
- 16: Membran von Einlassventil 6
- 17: Membran von Auslassventil 7
- 18: Betätigungsachse von Vorsteuerventil 8
- 19: Betätigungsachse von Vorsteuerventil 9
- 20: Ventilbohrung von Vorsteuerventil 8
- 21: Ventilbohrung von Vorsteuerventil 8
- 22: Ventilbohrung von Vorsteuerventil 9
- 23: Ventilbohrung von Vorsteuerventil 9
- 24: Steuerkanal von Vorsteuerventil 8
- 25: Steuerkanal von Vorsteuerventil 8
- 26: Steuerkanal von Vorsteuerventil 8
- 27: Steuerkanal von Vorsteuerventil 9
- 28: Steuerkanal von Vorsteuerventil 9
- 29: Steuerkanal von Vorsteuerventil 9
- 30: Einlegeteil
- 31: Magnetspule von Vorsteuerventil 8
- 32: Magnetspule von Vorsteuerventil 9
- 33: Ventilkern von Vorsteuerventil 8
- 34: Ventilanker von Vorsteuerventil 8
- 35: Ventilfeder von Vorsteuerventil 8
- 36: Ventilkern von Vorsteuerventil 9
- 37: Ventilanker von Vorsteuerventil 9
- 38: Ventilfeder von Vorsteuerventil 9
- 39: Umspritzung, Kunststoff
- 40: Ventilsitz von Vorsteuerventil 8
- 41: Ventilsitz von Vorsteuerventil 9
- 42: Eingangsseitiger Teil von Einlegeteil 30
- 43: Ausgangsseitiger Teil von Einlegeteil 30
- 44: Anschlusskabel
- 45: Anschlussbuchse
- 46: Ventilsitz von Einlassventil 6
- 47: Ventilsitz von Auslassventil 7
- 48: Zentralkanal von Einlassventil 6
- 49: Zentralkanal von Auslassventil 7
- 50: Innenwand von Gehäusedeckel 12
- 51: Steuerkammer von Einlassventil 6
- 52: Steuerkammer von Auslassventil 7
- 53: Ringkanal von Einlassventil 6
- 54: Ringkanal von Auslassventil 7
- 55, 55': Verbindungskanal
- 56: Zentralbohrung von Ventilkern 33
- 57: Längsnut von Ventilanker 34
- 58: Zentralbohrung von Ventilkern 36
- 59: Längsnut von Ventilanker 37
- 60: Steuerkanal von Vorsteuerventil 8
- 61: Steuerkanal von Vorsteuerventil 9
- 62.1: Bügelelement
- 62.2: Bügelelement
- 62.3: Bügelelement
- 63: Druckplatte von Bügelelement 62.1, 62.2, 62.3
- 64: Außenwand des Gehäusedeckels 12
- 65: Gelenkarm von Bügelelement 62.1, 62.2
- 66: Gelenkarm von Bügelelement 62.1, 62.2
- 67: Gelenkbohrung von Gelenkarm 65
- 68: Gelenkbohrung von Gelenkarm 66
- 69: Gelenkachse von Gelenkarm 65, 66
- 70: Befestigungslasche am Bügelelement 62.1
- 71: Bohrung in Befestigungslasche 70
- 72: Schraube
- 73: Vorsprung am Basisgehäuse 11
- 74: Gewindebohrung im Vorsprung 73
- 75: Pfeil
- 76: Befestigungslasche am Bügelelement 62.2
- 77: Verriegelungshaken an Befestigungslasche 76
- 78: Vorsprung am Basisgehäuse 11
- 79: Rastvertiefung am Basisgehäuse 11 bzw. am Vorsprung 78
- 80: Zylindrischer Durchzug an Gelenkbohrung 67
- 81: Zylindrischer Durchzug an Gelenkbohrung 68
- 82: Befestigungsarm von Bügelelement 62.3
- 83: Befestigungsarm von Bügelelement 62.3
- 84: Befestigungsarm von Bügelelement 62.3
- 85: Befestigungsarm von Bügelelement 62.3
- 86: Abwinkelung von Befestigungsarm 82
- 87: Abwinkelung von Befestigungsarm 83
- 88: Abwinkelung von Befestigungsarm 84
- 89: Abwinkelung von Befestigungsarm 85
- 90: Bodenwand von Basisgehäuse 11
- 91: Bodenplatte
- 92: Öffnung in Bodenplatte 91
- 93: Öffnung in Bodenplatte 91
- 94: Öffnung in Bodenplatte 91
- 95: Öffnung in Bodenplatte 91
- 96: Bohrung in Bodenplatte 91
- 97: Bohrung in Bodenplatte 91
- 98: Schraube
- 99: Schraube
- 100: Öffnung in Bodenwand 90
- 101: Gehäusewand von Basisgehäuse 11'
- 102: Gehäusewand von Basisgehäuse 11'
- 103: Dichtelement, Dichtungsleiste
- 104: Dichtelement, Dichtungsleiste
- 105: Wölbung von Druckplatte 63
- 106: Auswölbung von Druckplatte 63
- 107: Auswölbung von Druckplatte 63

## Patentansprüche

1. Ventileinheit (1, 1') zur Druckmodulation in einer Druckluft-Bremsanlage, mit einem Bremsdruckeingang (3), einem Bremsdruckausgang (4) und einem Entlüftungsausgang (5), sowie mit mindestens einem pneumatisch ansteuerbaren Hauptventil (6, 7) und einem dem Hauptventil (6, 7) zugeordneten, als Magnetventil ausgebildeten Vorsteuerventil (8, 9), welche in einem Ventilgehäuse (2, 2') angeordnet sind, das mit einer in Einbaulage weitgehend horizontalen Teilungsebene (10) in ein Basisgehäuse (11, 11') und einen Gehäusedeckel (12) unterteilt ist, wobei der Bremsdruckeingang (3), der Bremsdruckausgang (4) sowie der Entlüftungsausgang (5) in dem Basisgehäuse (11) angeordnet sind, das Hauptventil (6, 7) in dem Basisgehäuse (11) zwischen dem Bremsdruckeingang (3) und dem Bremsdruckausgang (4) mit senkrecht zu der Teilungsebene (10) ausgerichteter Betätigungsachse (14, 15) angeordnet ist, das Vorsteuerventil (8, 9) in dem Gehäusedeckel (12) angeordnet ist, und mindestens eine Steuerkammer (51, 52) des Hauptventils (6, 7) durch eine der Teilungsebene (10) zugewandte Innenwand (50) des Gehäusedeckels (12) begrenzt wird, **dadurch gekennzeichnet, dass** zur Befestigung des Gehäusedeckels (12) auf dem Basisgehäuse (11, 11') ein Bügelelement (62.1, 62.2, 62.3) vorgesehen ist, das im montierten Zustand an dem Basisgehäuse (11, 11') befestigt ist, und das mit einer weitgehend ebenen Druckplatte (63) unter Erzeugung einer federelastischen Vorspannkraft an einer parallel zu der Teilungsebene (10) des Ventilgehäuses (2, 2') ausgerichteten ebenen Außenwand (64) des Gehäusedeckels (12) anliegt.

2. Ventileinheit nach Anspruch 1, **dadurch gekennzeichnet, dass** das Bügelelement (62.1, 62.2) in Längsrichtung (13) des Ventilgehäuses (2, 2') seitlich mit jeweils einem Gelenkarm (65, 66) versehen ist, die den Gehäusedeckel (12) und das Basisgehäuse (11) seitlich umfassen sowie über eine jeweils in eine Gelenkbohrung (67, 68) eingreifende Gelenkachse (69) schwenkbar an dem Basisgehäuse (12) befestigt sind, und dass das Bügelelement (62.1, 62.2) in Längsrichtung (13) den Gelenkarmen (65, 66) gegenüberliegend starr an dem Basisgehäuse (11) befestigt ist.

3. Ventileinheit nach Anspruch 2, **dadurch gekennzeichnet, dass** das Bügelelement (62.1) in Längsrichtung (13) den Gelenkarmen (65, 66) gegenüberliegend mit einer Befestigungslasche (70) versehen ist, die weitgehend parallel zu der Druckplatte (63) ausgerichtet ist und mindestens eine Bohrung (71) aufweist, über die das Bügelelement (62.1) mittels einer Schraube (72) unter Erzeugung einer federelastischen Vorspannkraft mit dem Basisgehäuse (11) verschraubbar ist.

4. Ventileinheit nach Anspruch 3, **dadurch gekennzeichnet, dass** das Basisgehäuse (11) in Längsrichtung (13) der Gelenkachse (69) gegenüberliegend einen pfostenförmigen Vorsprung (73) aufweist, der die Teilungsebene (10) senkrecht in Richtung des Gehäusedeckels (12) überragt und mit mindestens einer Gewindebohrung (74) zur Verschraubung der Befestigungslasche (70) versehen ist.

5. Ventileinheit nach Anspruch 2, **dadurch gekennzeichnet, dass** das Bügelelement (62.2) in Längsrichtung (13) den Gelenkarmen (65, 66) gegenüberliegend mit einer Befestigungslasche (76) versehen ist, die weitgehend senkrecht zu der Druckplatte (63) in Richtung der Teilungsebene (10) abgewinkelt ist und einen deckelseitig nach innen gerichteten Verriegelungshaken (77) aufweist, mit dem das Bügelelement (62.2) durch den Eingriff in eine entgegengerichtete Rastvertiefung (79) unter Erzeugung einer federelastischen Vorspannkraft mit dem Basisgehäuse (11) verrastbar ist.

6. Ventileinheit nach Anspruch 5, **dadurch gekennzeichnet, dass** das Basisgehäuse (11) in Längsrichtung (13) der Gelenkachse (69) gegenüberliegend einen wandförmigen Vorsprung (78) aufweist, der die Teilungsebene (10) senkrecht in Richtung des Gehäusedeckels (12) überragt und mit der Rastvertiefung (79) zur Verrastung der Befestigungslasche (76) versehen ist.

7. Ventileinheit nach einem der Ansprüche 2 bis 6, **dadurch gekennzeichnet, dass** das Bügelelement (62.1, 62.2) mit der Druckplatte (63), den Gelenkarmen (65, 66) und der Befestigungslasche (70, 76) einstückig als Blechpress- und Blechstanzbauteil hergestellt ist.

8. Ventileinheit nach einem der Ansprüche 2 bis 7, **dadurch gekennzeichnet, dass** die Gelenkbohrungen (67, 68) der Gelenkarme (65, 66) jeweils mit einem zylindrischen Durchzug (80, 81) versehen sind.

9. Ventileinheit (1') nach Anspruch 1, **dadurch gekennzeichnet, dass** das Bügelelement (62.3) in Längsrichtung (13) des Ventilgehäuses (2') beidseitig mit jeweils zwei Befestigungsarmen (82 - 85) versehen ist, die den Gehäusedeckel (12) und das Basisgehäuse (11') seitlich umfassen sowie mit knieförmig nach innen gerichteten Abwinkelungen (86 - 89) jeweils eine der Teilungsebene (10) abgewandte, weitgehend ebene Bodenwand (90) des Basisgehäuses (11') umgreifen, sowie endseitig in zugeordnete Öffnungen (92 - 95) einer ebenen Bodenplatte (91) eingreifen, die an der Bodenwand (90) des Basisgehäuses (11') befestigt ist.

10. Ventileinheit nach Anspruch 9, **dadurch gekennzeichnet, dass** die Bodenplatte (91) in Längsrichtung (13) beidseitig jeweils mindestens eine Bohrung (96, 97) aufweist, über welche die Bodenplatte (91) mittels jeweils einer Schraube (98, 99) mit dem Basisgehäuse (11') verschraubbar ist.

11. Ventileinheit nach Anspruch 9 oder 10, **dadurch gekennzeichnet, dass** mindestens ein nach außen offener Verbindungskanal (55') des Basisgehäuses (11') im montierten Zustand durch die Bodenplatte (91) verschlossen ist, und dass zwischen den Verbindungskanal (55') begrenzenden Gehäusewänden (101, 102) des Basisgehäuses (11') und der Bodenplatte (91) Dichtelemente (103, 104) angeordnet sind.

12. Ventileinheit nach einem der Ansprüche 9 bis 11, **dadurch gekennzeichnet, dass** das Bügelelement (62.3) mit den Befestigungsarmen (82 - 85) sowie die Bodenplatte (91) jeweils einstückig als Blechpress- und Blechstanzbauteil hergestellt sind.

13. Ventileinheit nach einem der Ansprüche 1 bis 12, **dadurch gekennzeichnet, dass** die Druckplatte (63) des Bügelelementes (62.1) zur mittigen Einleitung einer federelastischen Vorspannkraft in Richtung der Außenwand (64) des Gehäusedeckels (12) gewölbt (105) ist.

14. Ventileinheit nach einem der Ansprüche 1 bis 12, **dadurch gekennzeichnet, dass** die Druckplatte (63) des Bügelelementes (62.1) zur lokalen Einleitung einer federelastischen Vorspannkraft mindestens eine zur Außenwand (64) des Gehäusedeckels (12) gerichtete Auswölbung (106, 107) aufweist.

15. Ventileinheit nach Anspruch 14, **dadurch gekennzeichnet, dass** die Auswölbung (106, 107) derart in der Druckplatte (63) positioniert und ausgebildet ist, dass sie im montierten Zustand des Bügelelementes (62.1) weitgehend mittig über einer von der Innenwand (50) des Gehäusedeckels (12) begrenzten Steuerkammer (51, 52) eines Hauptventils (6, 7) liegt.

16. Ventileinheit nach einem der Ansprüche 1 bis 15, **dadurch gekennzeichnet, dass** der Gehäusedeckel (12) ein zentrales, mit Ventilbohrungen (20, 21; 22, 23) und Steuerkanälen (24, 25, 26; 27, 28, 29) versehenes Einlegeteil (30) aufweist, in das die Magnetspulen (31, 32) und die mechanischen Bauteile der Vorsteuerventile (8, 9), wie der jeweilige Ventilkern (33, 36), der jeweilige Ventilanker (34, 37) und die jeweilige Ventilfeder (35, 38), eingesetzt sind, und das mit einem Kunststoff (39) umspritzt ist.

17. Ventileinheit nach einem der Ansprüche 1 bis 8, **dadurch gekennzeichnet, dass** der Bremsdruckeingang (3) und der Bremsdruckausgang (4) mit horizontaler Ausrichtung in einer Längsrichtung (13) weitgehend axial gegenüberliegend sowie der Entlüftungsausgang (5) dazwischen vertikal nach unten gerichtet in dem Basisgehäuse (11) angeordnet sind.

## Claims

1. Valve unit (1, 1') for modulating the pressure in a pneumatic brake system, having a brake pressure inlet (3), a brake pressure outlet (4) and a venting outlet (5), together with at least one pneumatically controllable main valve (6, 7) and a pilot valve (8, 9), embodied as a solenoid valve and assigned to the main valve (6, 7), which are arranged in a valve housing (2, 2'), which is subdivided by a plane of division (10), largely horizontal in the fitted position, into a main housing (11, 11') and a housing cover (12), wherein the brake pressure inlet (3), the brake pressure outlet (4) and the venting outlet (5) are arranged in the main housing (11), the main valve (6, 7) is arranged in the main housing (11) between the brake pressure inlet (3) and the brake pressure outlet (4) with an actuation axis (14, 15) oriented perpendicular to the plane of division (10), the pilot valve (8, 9) is arranged in the housing cover (12), and at least one control chamber (51, 52) of the main valve (6, 7) is defined by an inside wall (50) of the housing cover (12) facing the plane of division (10), **characterized in that** a bracket element (62.1, 62.2, 62.3) is provided for fixing the housing cover (12) on the main housing (11, 11'), which in the assembled state is fixed to the main housing (11, 11'), and which bears with a largely plane pressure plate (63) generating an elastic prestressing force on a plane outside wall (64) of the housing cover (12) oriented parallel to the plane of division (10) of the valve housing (2, 2').

2. Valve unit according to Claim 1, **characterized in that** the bracket element (62.1, 62.2) is provided with an articulated arm (65, 66) on each side in the longitudinal direction (13) of the valve housing (2, 2'), the arms laterally enclosing the housing cover (12) and the main housing (11) and being pivotally fixed to the main housing (12) via an axis of articulation (69) in each case engaging in an articulation hole (67, 68), and that in a longitudinal direction (13) opposite the articulated arms (65, 66) the bracket element (62.1, 62.2) is rigidly fixed to the main housing (11).

3. Valve unit according to Claim 2, **characterized in that** the bracket element (62.1), in a longitudinal direction (13) opposite the articulated arms (65, 66), is provided with a fixing clip (70), which is oriented largely parallel to the pressure plate (63) and has at least one hole (71), which serves for bolting the bracket element (62.1) to the main housing (11) by means of a bolt (72), generating an elastic prestressing force.

4. Valve unit according to Claim 3, **characterized in that** the main housing (11), in a longitudinal direction (13) opposite the axis of articulation (69), comprises a columnar projection (73), which extends perpendicularly beyond the plane of division (10) in the direction of the housing cover (12) and is provided with at least one threaded hole (74) for bolted fastening of the fixing clip (70).

5. Valve unit according to Claim 2, **characterized in that** the bracket element (62.2), in a longitudinal direction (13) opposite the articulated arms (65, 66), is provided with a fixing clip (76), which is bent largely perpendicular to the pressure plate (63) in the direction of the plane of division (10) and which comprises a locking hook (77), directed inwards on the cover side, which serves for latching the bracket element (62.2) to the main housing (11) through engagement in an opposing latching recess (79), generating an elastic prestressing force.

6. Valve unit according to Claim 5, **characterized in that** the main housing (11), in a longitudinal direction (13) opposite the axis of articulation (69), comprises a planar projection (78), which extends perpendicularly beyond the plane of division (10) in the direction of the housing cover (12) and is provided with the latching recess (79) for latching of the fixing clip (76).

7. Valve unit according to one of Claims 2 to 6, **characterized in that** the bracket element (62.1, 62.2) is manufactured in one piece together with the pressure plate (63), the articulated arms (65, 66) and the fixing clip (70, 76) as a sheet-metal pressing and sheet-metal stamping.

8. Valve unit according to one of Claims 2 to 7, **characterized in that** the articulation holes (67, 68) in the articulated arms (65, 66) are each provided with a cylindrical passage (80, 81).

9. Valve unit (1') according to Claim 1, **characterized in that** the bracket element (62.3) in the longitudinal direction (13) of the valve housing (2') is provided with two fixing arms (82 - 85) on each side, which laterally enclose the housing cover (12) and the main housing (11') and with inwardly elbowed bends (86 - 89) each grip around a largely plane base wall (90) of the main housing (11') remote from the plane of division (10), and at the end engage in assigned openings (92 - 95) in a plane base plate (91), which is fixed to the base wall (90) of the main housing (11').

10. Valve unit according to Claim 9, **characterized in that** the base plate (91) has at least one hole (96, 97) on each side in a longitudinal direction (13), which serves for bolted fastening of the base plate (91) to the main housing (11') by means of a bolt (98, 99) on each side.

11. Valve unit according to Claim 9 or 10, **characterized in that** in the assembled state at least one outwardly open connecting duct (55') in the main housing (11') is closed by the base plate (91), and that sealing elements (103, 104) are arranged between housing walls (101, 102) of the main housing (11'), defining the connecting duct (55'), and the base plate (91).

12. Valve unit according to one of Claims 9 to 11, **characterized in that** the bracket element (62.3) with the fixing arms (82 - 85) and the base plate (91) are manufactured in one piece at a time as a sheet-metal pressing and sheet-metal stamping.

13. Valve unit according to one of Claims 1 to 12, **characterized in that** the pressure plate (63) of the bracket element (62.1) is arched (105) in the direction of the outside wall (64) of the housing cover (12) in order to afford a central introduction of an elastic prestressing force.

14. Valve unit according to one of Claims 1 to 12, **characterized in that** the pressure plate (63) of the bracket element (62.1) comprises at least one convexity (106, 107) directed towards the outside wall (64) of the housing cover (12) for localized introduction of a elastic prestressing force.

15. Valve unit according to Claim 14, **characterized in that** the convexity (106, 107) is positioned and formed in the pressure plate (63) in such a way that in the assembled state of the bracket element (62.1) it lies largely centrally over a control chamber (51, 52) of a main valve (6, 7), defined by the inside wall (50) of the housing cover (12).

16. Valve unit according to one of Claims 1 to 15, **characterized in that** the housing cover (12) comprises a central insert (30), provided with valve bores (20, 21; 22, 23) and control ports (24, 25, 26; 27, 28, 29), into which the solenoids (31, 32) and the mechanical components of the pilot valves (8, 9), such as the respective valve core (33, 36), the respective valve armature (34, 37) and the respective valve spring (35, 38), are inserted, and which is overmolded with a plastic (39).

17. Valve unit according to one of Claims 1 to 8, **characterized in that** the brake pressure inlet (3) and the brake pressure outlet (4) are arranged, horizontally oriented in the main housing (11), largely axially opposite in a longitudinal direction (13) and with the venting outlet (5) directed vertically downwards between them.

## Revendications

1. Unité de soupape (1, 1') pour la modulation de pression dans une installation de freinage à air sous pression, comprenant une entrée de pression de freinage (3), une sortie de pression de freinage (4) et une sortie de ventilation (5) ainsi qu'au moins une soupape principale (6, 7) pouvant être commandée pneumatiquement, et une soupape pilote (8, 9) associée à la soupape principale (6, 7), réalisée sous forme d'électrovanne, lesquelles sont disposées dans un boîtier de soupape (2, 2') qui est divisé par un plan de séparation essentiellement horizontal (10) dans une position d'installation en un boîtier de base (11, 11') et un couvercle de boîtier (12), l'entrée de pression de freinage (3), la sortie de pression de freinage (4) ainsi que la sortie de ventilation (5) étant disposées dans le boîtier de base (11), la soupape principale (6, 7) étant disposée dans le boîtier de base (11) entre l'entrée de pression de freinage (3) et la sortie de pression de freinage (4) avec un axe d'actionnement (14, 15) orienté perpendiculairement au plan de séparation (10), la soupape pilote (8, 9) étant disposée dans le couvercle de boîtier (12) et au moins une chambre de commande (51, 52) de la soupape principale (6, 7) étant limitée par une paroi intérieure (50) du couvercle de boîtier (12) tournée vers le plan de séparation (10), **caractérisée en ce que** pour la fixation du couvercle de boîtier (12) sur le boîtier de base (11, 11'), il est prévu un élément d'étrier (62.1, 62.2, 62.3), qui, dans l'état monté, est fixé sur le boîtier de base (11, 11') et qui s'applique avec une plaque de pression essentiellement plane (63) en produisant une force de précontrainte élastique à ressort contre une paroi extérieure plane (64) du couvercle de boîtier (12) orientée parallèlement au plan de séparation (10) du boîtier de soupape (2, 2').

2. Unité de soupape selon la revendication 1, **caractérisée en ce que** l'élément d'étrier (62.1, 62.2) est pourvu, latéralement dans la direction longitudinale (13) du boîtier de soupape (2, 2'), à chaque fois d'un bras articulé (65, 66), lesquels entourent latéralement le couvercle de boîtier (12) et le boîtier de base (11) et sont fixés de manière à pouvoir pivoter sur le boîtier de base (12) par le biais d'un axe d'articulation (69) s'engageant à chaque fois dans un alésage d'articulation (67, 68), et **en ce que** l'élément d'étrier (62.1, 62.2) est fixé dans la direction longitudinale (13) rigidement au boîtier de base (11) à l'opposé des bras d'articulation (65, 66).

3. Unité de soupape selon la revendication 2, **caractérisée en ce que** l'élément d'étrier (62.1), dans la direction longitudinale (13) à l'opposé des bras d'articulation (65, 66), est pourvu d'une patte de fixation (70) qui est orientée essentiellement parallèlement à la plaque de pression (63) et qui présente au moins un alésage (71) par le biais duquel l'élément d'étrier (62.1) peut être vissé au boîtier de base (11) au moyen d'une vis (72) générant une force de précontrainte élastique à ressort.

4. Unité de soupape selon la revendication 3, **caractérisée en ce que** le boîtier de base (11) présente, dans la direction longitudinale (13) à l'opposé de l'axe d'articulation (69), une saillie en forme de colonnette (73) qui dépasse au-delà du plan de séparation (10) verticalement dans la direction du couvercle de boîtier (12) et qui est pourvue d'au moins un alésage fileté (74) pour le vissage de la patte de fixation (70).

5. Unité de soupape selon la revendication 2, **caractérisée en ce que** l'élément d'étrier (62.2) est pourvu, dans la direction longitudinale (13) à l'opposé des bras d'articulation (65, 66), d'une patte de fixation (76) qui est coudée essentiellement perpendiculairement à la plaque de pression (63) dans la direction du plan de séparation (10) et qui présente un crochet de verrouillage (77) orienté vers l'intérieur du côté du couvercle, au moyen duquel l'élément d'étrier (62.2) peut être encliqueté avec le boîtier de base (11) par l'engagement dans un renfoncement d'encliquetage opposé (79) en générant une force de précontrainte élastique à ressort.

6. Unité de soupape selon la revendication 5, **caractérisée en ce que** le boîtier de base (11) présente, dans la direction longitudinale (13) à l'opposé de l'axe d'articulation (69), une saillie en forme de paroi (78) qui dépasse au-delà du plan de séparation (10) verticalement dans la direction du couvercle de boîtier (12) et qui est pourvue du renfoncement d'encliquetage (79) pour l'encliquetage de la patte de fixation (76).

7. Unité de soupape selon l'une quelconque des revendications 2 à 6, **caractérisée en ce que** l'élément d'étrier (62.1, 62.2) est fabriqué avec la plaque de pression (63), les bras d'articulation (65, 66) et la patte de fixation (70, 76) d'une seule pièce sous forme de composant en tôle estampé et pressé.

8. Unité de soupape selon l'une quelconque des revendications 2 à 7, **caractérisée en ce que** les alésages d'articulation (67, 68) des bras articulés (65, 66) sont à chaque fois pourvus d'un passage cylindrique (80, 81).

9. Unité de soupape (1') selon la revendication 1, **caractérisée en ce que** l'élément d'étrier (62.3) est pourvu, dans la direction longitudinale (13) du boîtier de soupape (2') des deux côtés à chaque fois de deux bras de fixation (82 - 85) qui entourent latéralement le couvercle de boîtier (12) et le boîtier de base (11') et qui, avec des coudes (86 - 89) orientés en forme de genou vers l'intérieur, viennent en prise à chaque fois autour d'une paroi de fond essentiellement plane (90) du boîtier de base (11') opposée au plan de séparation (10), et viennent en prise du côté de l'extrémité dans des ouvertures associées (92 - 95) d'une plaque de fond plane (91) qui est fixée à la paroi de fond (90) du boîtier de base (11').

10. Unité de soupape selon la revendication 9, **caractérisée en ce que** la plaque de fond (91) présente, dans la direction longitudinale (13) des deux côtés, à chaque fois au moins un alésage (96, 97) par le biais duquel la plaque de fond (91) peut être vissée à chaque fois au moyen d'une vis (98, 99) au boîtier de base (11').

11. Unité de soupape selon la revendication 9 ou 10, **caractérisée en ce qu'**au moins un canal de liaison ouvert vers l'extérieur (55') du boîtier de base (11'), dans l'état monté, est fermé par la plaque de fond (91) et **en ce qu'**entre les parois de boîtier (101, 102) du boîtier de base (11') limitant le canal de liaison (55') et la plaque de fond (91) sont disposés des éléments d'étanchéité (103, 104).

12. Unité de soupape selon l'une quelconque des revendications 9 à 11, **caractérisée en ce que** l'élément d'étrier (62.3), avec les bras de fixation (82 - 85) ainsi que la plaque de fond (91) sont à chaque fois fabriqués d'une seule pièce sous forme de composant en tôle estampé et pressé.

13. Unité de soupape selon l'une quelconque des revendications 1 à 12, **caractérisée en ce que** la plaque de pression (63) de l'élément d'étrier (62.1), pour l'introduction centralement d'une force de précontrainte élastique à ressort, est cintrée (105) dans la direction de la paroi extérieure (64) du couvercle de boîtier (12).

14. Unité de soupape selon l'une des revendications 1 à 12, **caractérisée en ce que** la plaque de pression (63) de l'élément d'étrier (62.1), pour l'introduction locale d'une force de précontrainte élastique à ressort présente au moins un bombement (106, 107) orienté vers la paroi extérieure (64) du couvercle de boîtier (12).

15. Unité de soupape selon la revendication 14, **caractérisée en ce que** le bombement (106, 107) est positionné et réalisé dans la plaque de pression (63) de telle sorte que dans l'état monté de l'élément d'étrier (62.1), il s'applique essentiellement centralement par-dessus une chambre de commande (51, 52) d'une soupape principale (6, 7) limitée par la paroi intérieure (50) couvercle de boîtier (12).

16. Unité de soupape selon l'une quelconque des revendications 1 à 15, **caractérisée en ce que** le couvercle de boîtier (12) présente une pièce d'insertion centrale (30), pourvue d'alésages de soupape (20, 21 ; 22, 23) et de canaux de commande (24, 25, 26 ; 27, 28, 29), dans laquelle sont insérés les bobines magnétiques (31, 32) et les composants mécaniques des soupapes pilotes (8, 9), comme le noyau de soupape respectif (33, 36), l'induit de soupape respectif (34, 37) et le ressort de soupape respectif (35, 38), et qui est surmoulée avec un plastique (39).

17. Unité de soupape selon l'une quelconque des revendications 1 à 8, **caractérisée en ce que** l'entrée de pression de freinage (3) et la sortie de pression de freinage (4) sont disposées avec une orientation horizontale dans une direction longitudinale (13) essentiellement axialement à l'opposé l'une de l'autre, et la sortie de ventilation (5) est disposée entre elles verticalement de manière orientée verticalement vers le bas, dans le boîtier de base (11).
